# FASCICULE DE BREVET EUROPEEN

(11) **EP 1 580 074 B1**
(45) Date de publication et mention de la délivrance du brevet: **27.06.2012**
(21) Numéro de dépôt: 05290432.3
(22) Date de dépôt: 24.02.2005
(51) Int. Cl.: B60Q 1/02, G01N 21/47, B60Q 1/14

(54) **Procédé de détection d'une route mouillée et système d'éclairage mettant en oeuvre ce procédé**
Verfahren zur Detektion einer nassen Strasse und Beleuchtungssystem zu dessen Implementierung
Method for detecting a wet road and illumination system to implement the method

(30) Priorité: 26.03.2004 FR 0403175
(43) Date de publication de la demande: 28.09.2005
(73) Titulaire: VALEO VISION, 93012 Bobigny Cedex (FR)
(72) Inventeur: Dubrovin, Alexis, 91370 Verrieres le Buisson (FR)

(56) Documents cités:
- EP-A- 0 412 791
- DE-A- 4 431 750
- DE-A- 19 730 414
- US-A- 6 040 916
- US-A- 6 049 171
- US-B1- 6 254 259
- PATENT ABSTRACTS OF JAPAN vol. 1998, no. 13, 30 novembre 1998 (1998-11-30) & JP 10 206314 A (TAKUWA:KK), 7 août 1998 (1998-08-07)

## Description

### Domaine de l'invention

L'invention concerne un procédé mis en oeuvre dans un véhicule pour détecter, dans des conditions d'obscurité nécessitant la mise en fonctionnement d'un système d'éclairage, si la route sur laquelle circule le véhicule est mouillée. L'invention concerne également un système d'éclairage monté sur ce véhicule et mettant en oeuvre ce procédé.

L'invention trouve des applications dans le domaine des véhicules circulant sur routes comme, par exemple, les véhicules automobiles ou les véhicules poids lourds. Elle trouve, en particulier, des applications dans le domaine de l'éclairage par ces véhicules.

### Etat de la technique

Compte tenu du nombre important de véhicules circulant sur les routes, et afin de réduire les risques d'accidents, il est nécessaire de procurer, à chaque véhicule et à son conducteur, un éclairage le mieux adapté possible aux conditions de circulation. En particulier la nuit, il est important que chaque conducteur puisse avoir une vision optimale de la scène de route située à l'avant du véhicule et, notamment, des véhicules se trouvant dans cette scène de route. Lorsque les conditions météorologiques sont mauvaises, en particulier par temps de pluie, la route peut être mouillée. La lumière projetée par le système d'éclairage du véhicule est alors réfléchie par la route mouillée en direction des yeux du conducteur d'un véhicule circulant dans le sens inverse.

Autrement dit, le conducteur d'un premier véhicule circulant sur une route mouillée est ébloui par la lumière projetée par un second véhicule, circulant en sens inverse sur la même route, et réfléchie par la surface mouillée de la route.

Actuellement, les fabriquants de systèmes d'éclairage pour véhicules s'attachent à limiter le flux de la lumière projetée par un véhicule et pouvant être envoyé directement dans les yeux du conducteur d'un véhicule venant en sens inverse. Pour cela, la lumière est projetée avec une puissance différente au-dessus et au-dessous d'une ligne de champ de vision. Cependant, lorsque la route est mouillée, la réflectivité de la route peut renvoyer jusqu'à 20 à 30 fois plus de lumière que la lumière projetée directement dans les yeux du conducteur.

Les fabriquants cherchent donc, pour des questions de confort et de sécurité, à améliorer l'éclairage de la scène de route en fonction de l'état mouillé ou non de la route. Pour détecter si la route est mouillée, il existe actuellement plusieurs méthodes :
- L'une de ces méthodes consiste à considérer que si les essuie-glaces du véhicule sont en fonctionnement, c'est qu'il pleut et que, par conséquent, la route est mouillée. Cependant, très souvent, même quand la pluie a cessé, la route reste mouillée un certain temps. De plus, le conducteur peut choisir de mettre les essuie-glaces en fonctionnement pour nettoyer le pare-brise, sans que la route soit mouillée. L'efficacité de cette méthode n'est donc pas optimale.
- Une autre technique consiste à placer un émetteur infrarouge sur le châssis du véhicule et à associer cet émetteur à un réflecteur. L'état mouillé de la route est alors détecté par réflectivité. Cependant, si le châssis est sale, par exemple recouvert de boue, alors l'émetteur ne fonctionne pas et aucune détection de la route mouillée n'est établie.
- Une autre technique encore consiste à émettre un faisceau lumineux à l'avant du véhicule et à regarder la réflectivité de ce faisceau par rétro diffusion. Avec une telle technique, la puissance du faisceau doit être élevée pour que le faisceau réfléchi soit détectable et analysable par rétrodiffusion. Une telle analyse présente donc un coût élevé pour une pertinence relativement limitée.
- Une autre technique consiste à détecter l'état d'humidité d'une route au moyen d'un capteur embarqué dans le véhicule et sur lequel on forme une image d'une zone de la route, cette image étant un profil en long de la répartition lumineuse, sur la route, destiné à être comparé avec des profils de référence. Une telle technique, décrite dans le document EP-A-1 273 476, est relativement difficile et coûteuse à mettre en oeuvre.

### Exposé de l'invention

L'invention a justement pour but de remédier aux inconvénients des techniques exposées précédemment. A cette fin, l'invention propose un procédé, mis en oeuvre sur un véhicule, pour détecter si la route sur laquelle il circule est mouillée. Ce procédé est peu coûteux à mettre en oeuvre, car il peut utiliser des éléments déjà installés sur le véhicule pour d'autres fonctions telles que la vision de nuit (night vision, en termes anglo-saxons). Ce procédé consiste à réaliser et à traiter une image d'une scène de route éclairée par un éclairage indépendant du véhicule, par exemple, un éclairage public ou un éclairage réalisé par les projecteurs d'un autre véhicule circulant sur la même route.

De façon plus précise, l'invention concerne un procédé de détection d'une route mouillée par un premier véhicule circulant sur cette route dans des conditions d'obscurité nécessitant une mise en fonctionnement d'un éclairage, comportant les opérations suivantes :
- prise d'image d'une scène de route éclairée par ledit éclairage, et
- traitement de cette image.
Ce procédé se caractérise par le fait que :
- l'éclairage de la scène de route est réalisé par au moins un projecteur lumineux indépendant du premier véhicule et situé sur ladite route, et
- la prise d'image et le traitement d'image sont réalisés par, respectivement, un dispositif de prise d'image et un dispositif de traitement d'image embarqués dans le premier véhicule.

Ce procédé peut comporter, en outre, une ou plusieurs des caractéristiques suivantes :
- l'éclairage de la scène de route est réalisé par au moins deux projecteurs de lumière d'un second véhicule circulant sur ladite route.
- l'opération de traitement d'image consiste à détecter, dans l'image de la scène de route, au moins une tâche lumineuse principale correspondant à un faisceau lumineux émis par le projecteur lumineux, et à détecter, dans l'image de la scène de route, au moins une tâche lumineuse secondaire, d'intensité moins élevée que la tâche lumineuse principale, correspondant à une réflexion sur la route mouillée du faisceau lumineux émis par le projecteur lumineux.
- la tâche lumineuse secondaire est dans une zone de détection située en dessous de la tâche principale.
- l'opération de traitement d'image comporte une opération de seuillage sur au moins deux zones de l'image de la scène de route.
- lorsque l'éclairage est réalisé par un second véhicule, deux tâches principales sont détectées sur une même ligne horizontale, deux tâches secondaires étant détectées sur une autre ligne horizontale.

L'invention concerne également un système d'éclairage permettant de mettre en oeuvre ce procédé de détection d'une route mouillée. Ce système d'éclairage comporte un projecteur de lumière ayant une puissance lumineuse variable, commandée par une unité de commande mettant en oeuvre le procédé de l'invention. Ainsi, le faisceau lumineux émis par le projecteur est modulé dès que la route est détectée comme étant mouillée.

De façon plus précise, ce système d'éclairage pour véhicule comporte
- au moins un dispositif de projection d'un faisceau lumineux modulable, et
- une unité de commande assurant une commande de la modulation du faisceau lumineux,

II se caractérise par le fait que l'unité de commande met en oeuvre le procédé de détection d'une route mouillée cité précédemment.

Ce système peut comporter aussi une ou plusieurs des caractéristiques suivantes :
- l'unité de commande comporte un dispositif de prise d'image d'une scène de route et un dispositif de traitement d'image apte à détecter un état mouillé de la route sur laquelle circule le véhicule.
- le dispositif de prise d'image est placé à l'avant du véhicule et réalise des images d'une scène de route située à l'avant du véhicule.
- le dispositif de prise d'image est placé à l'arrière du véhicule et réalise des images d'une scène de route située à l'arrière du véhicule.
- le dispositif de prise d'image et le dispositif de traitement d'image assurent des fonctions de vision de nuit.

L'invention concerne également un véhicule équipé d'un tel système.

### Brève description des dessins

La figure 1 représente schématiquement un exemple d'image du faisceau lumineux émis par un véhicule circulant en sens inverse, lorsque la route est sèche.
La figure 2 représente schématiquement un exemple d'image du faisceau lumineux émis par un véhicule circulant en sens inverse, lorsque la route est mouillée.
La figure 3 représente schématiquement un exemple de système d'éclairage mettant en oeuvre le procédé de l'invention

### Description détaillée de modes de réalisation de l'invention

Le procédé de l'invention propose, pour détecter si une route est mouillée ou non, d'utiliser les caractéristiques de réflectivité de cette route. En effet, une route mouillée présente une bonne réflectivité, tandis qu'une route sèche (par opposition à mouillée) a une faible réflectivité. Autrement dit, si la route est mouillée, un faisceau lumineux éclairant la route se trouve réfléchi. Si la route est sèche, le faisceau lumineux n'est pas réfléchi. Le procédé de l'invention propose donc de déterminer, au moyen d'un équipement monté dans un véhicule, si le faisceau lumineux émis par un dispositif d'éclairage indépendant du véhicule est réfléchi par la surface de la route.

Le dispositif d'éclairage indépendant du véhicule peut être un dispositif d'éclairage public, du type lampadaire, situé en bordure de route et destiné à éclairer la route.

Le dispositif d'éclairage indépendant du véhicule peut aussi être dispositif d'éclairage équipant un autre véhicule circulant sur la même route. Dans toute la description qui va suivre, on appellera « premier véhicule » le véhicule dans lequel est monté un système d'éclairage mettant en oeuvre le procédé de l'invention et « second véhicule » un autre véhicule circulant sur la même route que le premier véhicule et dont le dispositif d'éclairage éclaire la scène de route du premier véhicule.

C'est ce mode de réalisation, dans lequel l'éclairage est réalisé par le second véhicule qui va maintenant être décrit. Dans ce mode de réalisation, l'éclairage est réalisé par deux projecteurs équipant le second véhicule et émettant chacun un faisceau lumineux en direction de la route, ces faisceaux assurant un éclairage de la scène de route du premier véhicule. Comme expliqué plus en détail par la suite, le second véhicule peut circuler en sens inverse du premier véhicule ; dans ce cas, la scène de route du premier véhicule est située à l'avant dudit véhicule. Le second véhicule peut aussi circuler dans le même sens que le premier véhicule ; dans ce cas, la scène de route du premier véhicule est située à l'arrière dudit véhicule.

Pour détecter si la route sur laquelle circulent le premier et le second véhicules est mouillée, l'invention propose d'effectuer une prise d'image de la scène de route du premier véhicule, incluant les faisceaux lumineux du second véhicule, puis d'analyser cette image pour en déduire si la route est mouillée ou sèche. Cette analyse d'image consiste à déterminer si les sources lumineuses (correspondant au faisceau lumineux émis par chaque projecteur du second véhicule), visibles par un dispositif de prise d'image embarqué dans le premier véhicule, possèdent une image réfléchie sur la route.

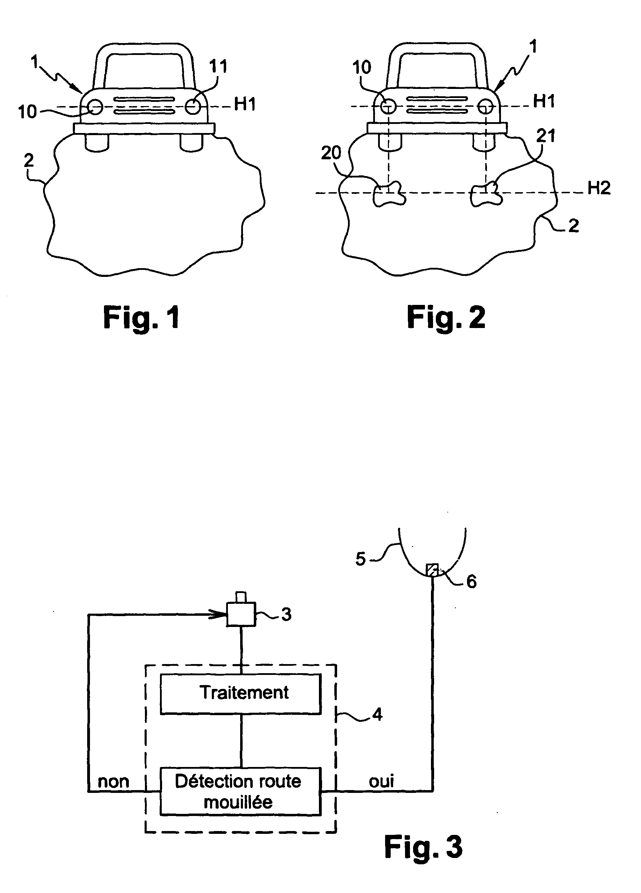

Sur les figures 1 et 2, on a représenté des exemples d'images de la scène de route réalisées au moyen du dispositif de prise d'image équipant le premier véhicule.

Dans l'exemple de la figure 1, un véhicule comporte un dispositif d'éclairage 1. Cet éclairage comprend deux projecteurs émettant chacun un faisceau lumineux. L'éclairage réalisé par ces deux faisceaux lumineux forme sur la route un halo de lumière 2. L'image de la scène de route comporte donc deux taches 10 et 11 d'intensité lumineuse élevée correspondant aux surfaces éclairantes des dispositifs d'éclairage du second véhicule (On comprend par surface éclairante la zone de la glace de fermeture du dispositif d'éclairage ou projecteur qui est traversée par la lumière émise par la source lumineuse dudit dispositif). Ces taches d'intensité élevée 10 et 11 sont appelées taches principales. Le halo de lumière 2 est relativement uniforme, c'est-à-dire qu'il ne comporte pas une ou plusieurs zone(s) dont l'intensité est plus élevée que sur l'ensemble du halo. Autrement dit, dans cet exemple, le traitement d'image permet seulement de détecter deux taches principales 10 et 11 sensiblement alignées sur une même ligne horizontale H1. La présence de ces deux taches principales 10 et 11 permet, dans l'invention, de déduire qu'un second véhicule est présent dans la scène de route du premier véhicule et que la route n'est pas mouillée.

Dans l'exemple de la figure 2, le véhicule comporte, comme dans la figure 1, deux projecteurs émettant chacun un faisceau lumineux. L'éclairage réalisé par ces deux faisceaux lumineux forme sur la route le halo de lumière 2. Ce halo de lumière 2 comporte deux zones 20 et 21 d'intensité lumineuse plus élevée que l'intensité moyenne du halo 2. Ces zones 20 et 21 ont une intensité lumineuse intermédiaire entre l'intensité des taches 10 et 11 et l'intensité moyenne du halo 2. Ces zones 20 et 21 sont appelées taches secondaires. Dans l'exemple de la figure 2, on voit qu'à chaque tache principale 10 et 11, il correspond une tache secondaire, respectivement, 20 et 21 située à une certaine distance en dessous de la tache principale. Chaque tache secondaire 20 et 21 correspond à une réflexion du faisceau lumineux émis par un des projecteurs du second véhicule sur la route, lorsque celle-ci est mouillée.

En d'autres termes, l'image de la scène de route du premier véhicule comporte :
- deux taches principales 10 et 11 d'intensité lumineuse élevée correspondant aux faisceaux lumineux du second véhicule ; ces deux taches principales sont alignées sur une même ligne sensiblement horizontale H1 (dans le cas où la route est plane).
- deux taches secondaires 20 et 21 d'intensité intermédiaire correspondant à la réflexion des faisceaux lumineux sur la route ; ces deux taches secondaires sont alignées sur une ligne sensiblement horizontale H2, parallèle à la ligne H1 et située en dessous de ladite ligne H1. Il est à noter, en effet, que sur un véhicule, les projecteurs sont situés à la même hauteur donc sensiblement à la même distance de la route. Par conséquent, l'image réfléchie de ces faisceaux lumineux se situe sensiblement à la même distance sous les projecteurs. Les deux taches principales sont donc alignées horizontalement et les deux taches secondaires sont également alignées sur une ligne horizontale, parallèle à la ligne horizontale passant par les taches principales. On note que si la distance H1 peut être déterminée, la distance H2 va dépendre dans une certaine mesure de l'angle sous lequel il est observé : elle va « se déplacer » en même temps que se déplace l'observateur. Elle peut dépendre également de l'assiette du véhicule, tout particulièrement quand celui-ci n'est pas équipé d'un système de correction d'assiette automatique.

Le procédé de l'invention comporte donc les étapes suivantes :
- On réalise, au moyen d'un dispositif de prise d'image embarqué sur le premier véhicule, une image de la scène de route comportant les faisceaux lumineux émis par les projecteurs du second véhicule.
- On recherche, dans cette image, les taches principales correspondant à ces faisceaux lumineux.
- On recherche ensuite, sur cette image, si le halo de lumière créé par les faisceaux lumineux comporte des taches secondaires d'intensité plus élevée que l'intensité moyenne du halo. Ces taches secondaires sont recherchées dans une zone située à une certaine distance en dessous des taches principales. La recherche des taches secondaires, comme celle des taches principales, est réalisée par seuillage sur les 4 zones recherchées, avec détermination des gradients de lumière pour déterminer les éventuelles zones d'intensité lumineuse plus élevée.
- Lorsque de telles taches secondaires sont détectées, on peut vérifier si elles correspondent chacune à une tache principale et/ou si elles sont alignées selon une même ligne.

Lorsque des taches secondaires ont été détectées, on en déduit que la route est mouillée. Cette information de route mouillée peut être utilisée pour activer une fonction du véhicule permettant d'optimiser le comportement dudit véhicule, du fait de cette route mouillée, comme la direction, la transmission, le régime moteur, l'éclairage, etc.

Sur la figure 3, on a représenté un exemple d'un système d'éclairage dans lequel le procédé de l'invention est mis en oeuvre. Ce système d'éclairage comporte deux projecteurs de lumière dont au moins un est modulable en intensité. Ce projecteur est référencé 5 sur la figure 3. Ce projecteur est destiné à éclairer la scène de route située à l'avant du premier véhicule. Ce projecteur peut être un projecteur de type elliptique comme celui décrit dans la demande de brevet EP-A-1 308 669, dans lequel un cache amovible supplémentaire est monté. Ce cache amovible a une position de retrait dans laquelle il ne modifie pas l'intensité du flux lumineux et une position dans laquelle il est placé devant le faisceau lumineux afin de diminuer localement l'intensité lumineuse. Dans cette dernière position, le cache est placé à un emplacement précis correspond à la partie du faisceau lumineux qui, réfléchi sur la route, arriverait directement dans l'oeil du conducteur.

Le système d'éclairage de l'invention comporte également une unité de commande 3, 4 de ce projecteur 5. Cette unité de commande met en oeuvre le procédé décrit précédemment. Plus précisément, cette unité de commande assure la commande de la modulation du faisceau lumineux émis par le projecteur 5. Dans le cas d'un projecteur elliptique à cache, l'unité de commande assure la mise en place et/ou le retrait du cache dans le projecteur. Il est à noter, toutefois, que le système d'éclairage de l'invention peut comporter un autre type de projecteur que celui cité précédemment, c'est-à-dire un projecteur émettant un flux lumineux modulable par des moyens autres que la mise en place d'un cache.

L'unité de commande du système d'éclairage de l'invention comporte :
- un dispositif de prise d'image 3, du type caméra vidéo ou autre capteur d'image dans le visible ou le proche infrarouge, assurant la prise d'image de la scène de route du premier véhicule, et
- un dispositif de traitement d'image 4, par exemple un ordinateur de bord du véhicule, qui assure l'analyse, telle que décrite précédemment, de l'image réalisée par le dispositif de prise d'image 3.

Ainsi, une fois que l'image a été réalisée par le dispositif de prise d'image 3, elle est transmise au dispositif de traitement 4. Celui-ci analyse l'image et en déduit, de la façon expliquée précédemment, si la route est mouillée. Lorsque la route à été détectée comme étant mouillée, alors un signal est transmis au projecteur 5 pour mettre en place le cache 6 afin de limiter l'intensité du flux lumineux localement, c'est-à-dire limiter le flux à l'emplacement du projecteur qui correspond à l'impact réfléchi par la route mouillée. Au contraire, si la route est détectée comme sèche, alors le cache reste dans sa position de retrait.

Dans un mode de réalisation, le cache est mis en place dès que la route est détectée comme étant mouillée. Il est ensuite retiré dès que la route est détectée comme étant sèche.

Dans un autre mode de réalisation, on choisit, lorsque le cache est mis en place, de le laisser en place pendant un délai prédéterminé. Pour cela, on applique à la détection une hystérésis d'une longueur prédéfinie. De préférence, cette hystérésis est relativement longue de sorte que la fonction de masque du projecteur est conservée tant qu'une information contraire n'est pas reçue et/ou confirmée par l'unité de commande. Plus précisément, le cache est mis en place devant le faisceau lumineux dès que la route est détectée comme mouillée. Il n'est ensuite retiré qu'après un délai minimal, par exemple, d'au moins deux minutes. Ainsi, le masquage du faisceau lumineux ne peut être mis en place et retiré de façon très rapprochée, par exemple, lorsque le véhicule circule sur une route mouillée, partiellement abritée par des arbres. Le fait de choisir une longue hystérésis permet de lisser toutes les petites fluctuations détectées.

Le dispositif de prise d'image 3 peut être placé à l'avant du véhicule, par exemple dans l'habitacle à proximité du pare-brise ou bien en extérieur sur les rétroviseurs du véhicule. L'image de la scène de route est alors une image prise à l'avant du véhicule. Cette image contient donc les faisceaux lumineux d'un véhicule circulant en sens inverse sur la route.

Le dispositif de prise d'image 3 peut aussi être placé à l'arrière du véhicule, par exemple dans l'habitacle à proximité de la vitre arrière du véhicule. L'image de la scène de route est alors une image prise à l'arrière du véhicule. Cette image contient les faisceaux lumineux d'un véhicule circulant derrière le premier véhicule, dans le même sens.

L'unité de commande 3, 4 telle qu'elle vient d'être décrite est embarquée sur le véhicule pour mettre en oeuvre le procédé de l'invention. Dans un mode de réalisation de l'invention, le dispositif de prise d'image 3 et le dispositif de traitement d'image 4 formant l'unité de commande sont des dispositifs déjà montés dans le véhicule pour réaliser d'autres fonctions. En effet, actuellement, les véhicules sont de plus en plus souvent équipés, dès l'origine, d'un dispositif de prise d'image associé à un dispositif de traitement d'image (par exemple une caméra vidéo reliée à l'ordinateur de bord). Cet équipement peut être prévu à l'origine pour une fonction de vision de nuit ou bien d'assistance au stationnement, etc. Il est alors relativement simple, et peu coûteux, d'installer une nouvelle fonction dans le dispositif de traitement d'image d'origine pour détecter des taches principales et/ou secondaires dans une image captée par le dispositif de prise d'image d'origine. L'invention permet ainsi une détection de route mouillée sans surcoût de matériel par rapport à l'installation existante sur le véhicule.

Dans ce cas, le système d'éclairage de l'invention permet de prendre en compte, en plus de l'information de route mouillée, toutes les informations pertinentes émises par d'autres éléments du véhicule. Ces informations peuvent provenir, par exemple, de la navigation de la vision de nuit ou d'un autre traitement d'image et renseigner sur la forme de la route, la présence de tunnels, de virages, etc. En utilisant ces informations, le système de l'invention peut affiner la zone d'observation des réflexions.

## Revendications

1. Procédé pour détecter, dans des conditions d'obscurité nécessitant une mise en fonctionnement d'un dispositif d'éclairage (1), si la route sur laquelle circule un premier véhicule est dans un état mouillé, comportant les opérations suivantes :
- prise d'une image d'une scène de route éclairée par ledit dispositif d'éclairage, et
- traitement de cette image,
la prise de l'image et le traitement de l'image étant réalisés par, respectivement, un dispositif de prise d'image (3) et un dispositif de traitement d'image (4) embarqués dans le premier véhicule.
**caractérisé en ce que** :
- l'éclairage de la scène de route est réalisé par au moins un dispositif d'éclairage, indépendant du premier véhicule, situé sur ladite route, et
- l'image de la scène de route inclut la source lumineuse dudit dispositif d'éclairage,
et **en ce que** l'opération de traitement d'image consiste à :
- détecter, dans l'image la source lumineuse, appelée tache lumineuse principale (10, 11), et
- détecter, dans l'image, l'image réfléchie de la source lumineuse (10, 11), appelée tache lumineuse secondaire (20, 21), d'intensité moins élevée que la tâche lumineuse principale,
- déduire de la présence d'une telle tache lumineuse secondaire (20, 21) que la route est dans un état mouillé.

2. Procédé selon la revendication 1, **caractérisé en ce que** l'éclairage de la scène de route est réalisé par au moins deux projecteurs de lumière d'un second véhicule circulant sur ladite route.

3. Procédé selon l'une quelconque des revendications 1 ou 2, **caractérisé en ce que** la tache lumineuse secondaire (20, 21) est détectée dans une zone de détection située en dessous de la tâche principale.

4. Procédé selon l'une quelconque des revendications précédentes, **caractérisé en ce que** l'opération de traitement de l'image comporte une opération de seuillage sur au moins deux zones de l'image de la scène de route.

5. Procédé selon l'une quelconque des revendications précédentes, **caractérisé en ce que**, lorsque l'éclairage est réalisé par un second véhicule, deux taches lumineuses principales sont détectées sur une même ligne horizontale (H1), deux taches lumineuses secondaires étant détectées sur une autre ligne horizontale (H2).

6. Système d'éclairage pour le premier véhicule,
**caractérisé en ce qu'**il comporte :
- au moins un dispositif (5) de projection d'un faisceau lumineux modulable, et
- une unité de commande (3, 4) assurant une commande de la modulation du faisceau lumineux et comportant un dispositif de prise d'image (3) d'une scène de route et un dispositif de traitement d'image (4) apte à détecter un état mouillé de la route sur laquelle circule le premier véhicule selon le procédé des revendications 1 à 5.

7. Système selon la revendication 6, **caractérisé en ce que** le dispositif de prise d'image est placé à l'avant du véhicule et réalise des images d'une scène de route située à l'avant du véhicule.

8. Système selon la revendication 6, **caractérisé en ce que** le dispositif de prise d'image est placé à l'arrière du véhicule et réalise des images d'une scène de route située à l'arrière du véhicule.

9. Système selon l'une quelconque des revendications 6 à 8, **caractérisé en ce que** le dispositif de prise d'image et le dispositif de traitement d'image assurent des fonctions de vision de nuit et/ou de navigation et/ou d'aide au stationnement.

## Claims

1. A method for detecting, in conditions of poor visibility requiring the implementation of an illumination device (1), whether the road on which a first vehicle is travelling is in a wet state comprising the following operations:
- capturing an image of a road scene illuminated by the said illumination device, and
- processing this image, with the capturing of the image and the processing of the image being performed by, respectively, an image-capturing device (3) and an image-processing device (4) on-board the first vehicle being **characterised in that**:
- the illumination of the road scene is produced by at least one illumination device, independent of the first vehicle and being located on the aforesaid road, and
- the image of the road scene includes the luminous source of the aforesaid illumination device, and in which the image-processing operation consists of:
- detecting, within the image of the luminous source, a so-called main light spot (10, 11), and
- detecting, within the image, the reflected image of the luminous source (10, 11) a so-called secondary light spot having a lower intensity than the main light spot,
- deducing from the presence of such a secondary light spot (20, 21) that the road is in a wet state.

2. A method according to claim 1, **characterised in that** the illumination of the road scene is produced by at least two headlights of a second vehicle travelling upon the aforesaid road.

3. A method according to claims 1 and 2, **characterised in that** the secondary light spot (20, 21) is detected within a detection area located below the main light spot.

4. A method according to any one of the preceding claims, **characterised in that** the image-processing operation includes a threshold in operation on at least two areas of the image of the road scene.

5. A method according to any one of the preceding claims, **characterised in that** when the illumination is produced by a second vehicle, two main light spots are detected along the same horizontal line (H1), two secondary light spots being detected on another horizontal line (H2).

6. Illumination system for the first vehicle **characterised in that** it comprises:
- at least one headlight (5) projecting an adjustable luminous beam, and
- a control unit (3, 4) providing a control of the adjustment of the luminous beam and including an image-capturing device (3) of a road scene and an image-processing device (4) suitable for detecting a wet state of the road on which the first vehicle is travelling in accordance with the method described in claims 1 to 5.

7. System according to claim 6, **characterised in that** the image-capturing device is positioned at the front of the vehicle and produces images of a road scene located in front of the vehicle.

8. System according to claim 6, **characterised in that** the image-capturing device is positioned at the rear of the vehicle and produces images of a road scene located at the rear of the vehicle.

9. System according to any one of claims 6 to 8, **characterised in that** the image-capturing device and the image-processing device provide night vision and/or navigation and/or parking aid functions.

## Patentansprüche

1. Verfahren zum Erkennen, bei dunklen, eine Inbetriebnahme einer Beleuchtungsvorrichtung (1) erfordernden Lichtverhältnissen, ob die von einem ersten Fahrzeug befahrene Straße nass ist, mit den folgenden Schritten:
- Aufnehmen eines Bildes einer von der Beleuchtungsvorrichtung beleuchteten Straßenszene, und
- Verarbeiten des Bildes,
wobei die Bildaufnahme und die Bildverarbeitung durch eine Bildaufnahmevorrichtung (3) bzw. eine Bildverarbeitungsvorrichtung (4) erfolgt, die sich beide an Bord des ersten Fahrzeugs befinden,
**dadurch gekennzeichnet, dass**:
- die Beleuchtung der Straßenszene durch wenigstens eine vom ersten Fahrzeug unabhängige, auf der Straße befindliche Beleuchtungsvorrichtung erfolgt, und
- das Bild der Straßenszene die Lichtquelle der Beleuchtungsvorrichtung enthält, und dass der Bildverarbeitungsvorgang darin besteht,
- in dem Bild die als Hauptlichtfleck (10, 11) bezeichnete Lichtquelle zu erkennen, und
- in dem Bild das von der Lichtquelle (10, 11) reflektierte, als sekundärer Lichtfleck (20, 21) bezeichnete Bild zu erkennen, dessen Intensität geringer ist als der Hauptlichtfleck,
- aus der Existenz eines derartigen sekundären Lichtflecks (20, 21) abzuleiten, dass die Fahrbahn nass ist.

2. Verfahren nach Anspruch 1,
**dadurch gekennzeichnet, dass** die Beleuchtung der Straßenszene durch wenigstens zwei Scheinwerfer eines zweiten auf der Straße fahrenden Fahrzeugs erfolgt.

3. Verfahren nach einem der Ansprüche 1 oder 2,
**dadurch gekennzeichnet, dass** der sekundäre Lichtfleck (20, 21) in einem unterhalb des Hauptlichtflecks liegenden Erfassungsbereich erkannt wird.

4. Verfahren nach einem der vorhergehenden Ansprüche,
**dadurch gekennzeichnet, dass** der Bildverarbeitungsvorgang einen Vorgang zum Schwellenwertvergleich in wenigstens zwei Bereichen des Bildes der Straßenszene umfasst.

5. Verfahren nach einem der vorhergehenden Ansprüche,
**dadurch gekennzeichnet, dass** dann, wenn die Beleuchtung durch ein zweites Fahrzeug erzeugt wird, zwei Hauptlichtflecken auf ein und derselben horizontalen Linie (H1) erkannt werden, wobei zwei sekundäre Lichtflecken auf einer andere horizontalen Linie (H2) erkannt werden.

6. Beleuchtungsanlage für das erste Fahrzeug,
**dadurch gekennzeichnet, dass** diese umfasst:
- wenigstens eine Vorrichtung (5) zur Projektion eines modulierbaren Lichtbündels, und
- eine Steuereinheit (3, 4), die eine Steuerung der Lichtmodulation gewährleistet und eine Bildaufnahmevorrichtung (3) zur Aufnahme einer Straßenszene und eine Bildverarbeitungsvorrichtung (4) umfasst, die einen nassen Zustand der Straße, auf der das erste Fahrzeug fährt, gemäß dem Verfahren der Ansprüche 1 bis 5 zu erkennen vermag.

7. Anlage nach Anspruch 6,
**dadurch gekennzeichnet, dass** die Bildaufnahmevorrichtung an der Fahrzeugfront angeordnet ist und Bilder von einer vor dem Fahrzeug liegenden Straßenszene macht.

8. Anlage nach Anspruch 6,
**dadurch gekennzeichnet, dass** die Bildaufnahmevorrichtung am Fahrzeugheck angeordnet ist und Bilder von einer hinter dem Fahrzeug liegenden Straßenszene macht.

9. Anlage nach einem der Ansprüche 6 bis 8,
**dadurch gekennzeichnet, dass** die Bildaufnahmevorrichtung und die Bildverarbeitungsvorrichtung Nachtsicht- und/oder Navigations- und/oder Einparkhilfsfunktionen wahrnehmen.
